# EUROPEAN PATENT APPLICATION

(11) **EP 3 358 676 A1**
(43) Date of publication of application: **08.08.2018**
(21) Application number: 18154569.0
(22) Date of filing: 01.02.2018
(51) Int. Cl.: H01Q 1/52, H01Q 21/28, H01Q 9/06, H01Q 13/10, H01Q 23/00, G01S 7/03, H01Q 9/28, H04B 7/0413

(54) **MODULE, WIRELESS COMMUNICATION APPARATUS, AND RADAR APPARATUS**

(30) Priority: 07.02.2017 JP 2017020617
(71) Applicant: Panasonic Corporation, Osaka 571-8501 (JP)
(72) Inventor: SATO, Junji, Osaka-shi, Osaka 540-6207 (JP)
(74) Representative: Grünecker Patent- und Rechtsanwälte PartG mbB

(57) **Abstract**

A module includes a dielectric substrate, one or more electric coupling antenna elements that are formed in one or more conductive layers included in the dielectric substrate and that have a shape elongated in an electric field direction of an electromagnetic wave to be radiated by the one or more electric coupling antenna elements, and one or more magnetic coupling antenna elements that are formed in the one or more conductive layers and that have a shape elongated in a magnetic field direction of the electromagnetic wave to be radiated by the one or more electric coupling antenna elements.

## Description

### BACKGROUND

### 1. Technical Field

The present disclosure relates to a module, a wireless communication apparatus, and a radar apparatus.

### 2. Description of the Related Art

In recent years, radar apparatuses using the millimeter-wave band have been put into practical use for automotive radar, and it is expected that the technology will be applied to other industries in the future. For example, using a radar apparatus that controls a beam radiation direction with high accuracy in three dimensions (for example, both horizontal azimuth angle and vertical elevation angle) is being studied to achieve autonomous control of vehicles and machines. A multiple-input multiple-output (MIMO) radar method, which uses a plurality of transmitting antennas and a plurality of receiving antennas, is known as an example of such radar apparatuses that control the beam radiation direction (for example, refer to Japanese Unexamined Patent Application Publication No. 2014-85317, hereinafter referred to as Patent Literature 1).

Downsizing and cost reduction of modules including antennas and high-frequency (radio-frequency) circuits are expected for wireless communication apparatuses and radar apparatuses using the millimeter-wave band, and investigations are ongoing for a configuration in which MIMO array antennas that have a plurality of transmitting and receiving channels are formed as planar antennas in a substrate, and a plurality of MIMO antenna elements are disposed in the substrate of limited size.

### SUMMARY

However, there have been inadequate investigations concerning a suitable substrate size to accommodate a configuration in which a plurality of antenna elements are disposed in two dimensions (for example, in a plane) in a substrate to control the beam radiation direction in three dimensions (for example, both horizontal azimuth angle and vertical elevation angle).

One non-limiting and exemplary embodiment provides a module, a wireless communication apparatus, and a radar apparatus that enable downsizing of a substrate in which a plurality of antenna elements are disposed.

In one general aspect, the techniques disclosed here feature a module including a dielectric substrate, one or more electric coupling antenna elements that are formed in one or more conductive layers included in the dielectric substrate and that have a shape elongated in an electric field direction of an electromagnetic wave to be radiated by the one or more electric coupling antenna elements, and one or more magnetic coupling antenna elements that are formed in the one or more conductive layers and that have a shape elongated in a magnetic field direction of the electromagnetic wave to be radiated by the one or more electric coupling antenna elements.

According to an aspect of the present disclosure, a substrate in which a plurality of antenna elements are disposed may be downsized.

It should be noted that general or specific embodiments may be implemented as a system, an apparatus, a method, an integrated circuit, a computer program, a storage medium, or any selective combination thereof.

Additional benefits and advantages of the disclosed embodiments will become apparent from the specification and drawings. The benefits and/or advantages may be individually obtained by the various embodiments and features of the specification and drawings, which need not all be provided in order to obtain one or more of such benefits and/or advantages.

### BRIEF DESCRIPTION OF THE DRAWINGS

Fig. 1 illustrates an antenna configuration of an existing MIMO radar disclosed in Patent Literature 1;
Fig. 2 depicts a structure of a module according to a first embodiment of the present disclosure;
Fig. 3A is a top view of an example of an antenna substrate in which antenna elements of the same shape are disposed;
Fig. 3B is a cross sectional view taken along line IIIB-IIIB of Fig. 3A;
Fig. 4A is a top view of an example of an antenna substrate in which antenna elements of different shapes are disposed;
Fig. 4B is a cross sectional view taken along line IVB-IVB of Fig. 4A;
Fig. 5 illustrates isolation characteristics between antenna elements of two antenna substrates;
Fig. 6 is a top view of an example of an antenna substrate in which antenna elements of the same shape are disposed;
Fig. 7 is a top view of an example of an antenna substrate according to a modification of the first embodiment of the present disclosure;
Fig. 8A depicts a planar antenna disclosed in U.S. Patent No. 6,262,495 (hereinafter referred to as Patent Literature 2);
Fig. 8B is a cross sectional view taken along line VIIIB-VIIIB of Fig. 8A;
Fig. 9A is a top view of a structure of planar antennas disclosed in Fan Yang, et al., "Microstrip Antennas Integrated With Electromagnetic Band-Gap (EBG) Structures: A Low Mutual Coupling Design for Array Applications", IEEE Transaction on Antennas and Propagation, vol. 51, No. 10, October 2003, pp. 2936-2946 (hereinafter referred to as Non Patent Literature 1);
Fig. 9B is a cross sectional view taken along line IXB-IXB of Fig. 9A;
Fig. 10 depicts a structure of a module according to a second embodiment of the present disclosure;
Fig. 11A is an enlarged view of an electromagnetic band gap (EBG) structure and a peripheral area of the EBG structure of the module according to the second embodiment of the present disclosure;
Fig. 11B is a cross sectional view taken along line XIB-XIB of Fig. 11A;
Fig. 12A is a top view of an example of an antenna substrate in which antenna elements of the same shape are disposed;
Fig. 12B is a cross sectional view taken along line XIIB-XIIB of Fig. 12A;
Fig. 13 illustrates isolation characteristics between antenna elements of two antenna substrates;
Fig. 14A is a top view of an example of an antenna substrate in which antenna elements of different shapes are disposed;
Fig. 14B is a cross sectional view taken along line XIVB-XIVB of Fig. 14A;
Fig. 15 illustrates isolation characteristics between antenna elements of two antenna substrates;
Fig. 16 is a top view of an example of an antenna substrate in which antenna elements of the same shape are disposed; and
Fig. 17 is a top view of an example of an antenna substrate according to a modification of the second embodiment of the present disclosure.

### DETAILED DESCRIPTION

The present disclosure relates to a module used for a MIMO radar, and for example, to a small module that integrates a high-frequency (radio-frequency) circuit and antennas in a high-frequency band in the millimeter-wave band.

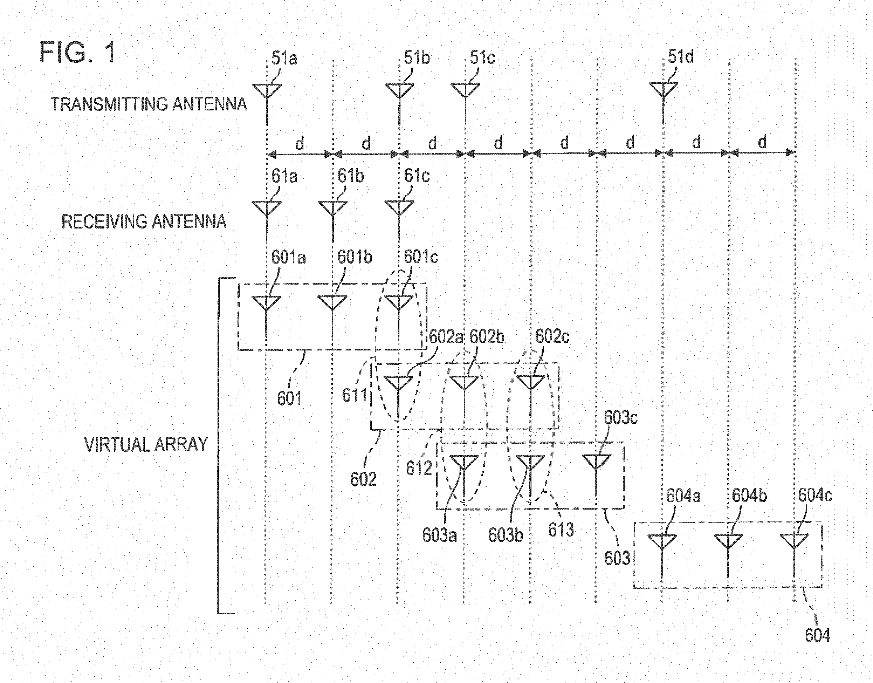

Fig. 1 illustrates an antenna configuration of an existing MIMO radar disclosed in Patent Literature 1. Fig. 1 depicts transmitting antennas 51a to 51d and receiving antennas 61a to 61c.

The receiving antenna 61 a receives, as receive signals, signals that have been transmitted from the transmitting antennas 51a to 51d and reflected by an object. The receiving antennas 61 b and 61 c operate in the same manner.

Three virtual antennas 601a to 601c enclosed by dash-dotted line 601 represent receiving antennas that receive a signal transmitted from the transmitting antenna 51a. Three virtual antennas 602a to 602c enclosed by dash-dotted line 602 represent receiving antennas that receive a signal transmitted from the transmitting antenna 51b. Three virtual antennas 603a to 603c enclosed by dash-dotted line 603 represent receiving antennas that receive a signal transmitted from the transmitting antenna 51c. Three virtual antennas 604a to 604c enclosed by dash-dotted line 604 represent receiving antennas that receive a signal transmitted from the transmitting antenna 51 d.

Thus, a virtual array includes nine antennas equally spaced at an interval of d. This configuration is able to suppress generation of a grating lobe (an unnecessary radiation component generated at an angle where the transmitted electromagnetic waves are completely in phase with each other in a direction other than the main beam direction).

However, Patent Literature 1 discloses the configuration illustrated in Fig. 1, which is a MIMO radar in which antennas are disposed in one direction, and does not refer to a module in which antennas that control a beam in three dimensions are disposed.

The present disclosure has been made in view of the foregoing circumstances by focusing on employing a plurality of antenna elements having different configurations in a MlMO configuration.

Next, embodiments of the present disclosure will be described in detail with reference to drawings. The embodiments described below are examples, and the present disclosure is not limited to these embodiments in any way.

### First Embodiment

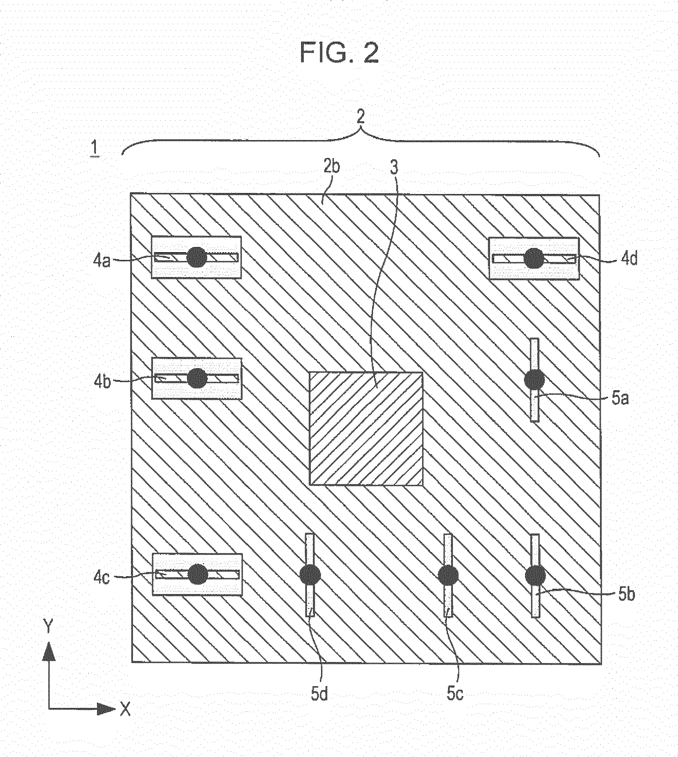

Fig. 2 depicts a structure of a module 1 according to a first embodiment. The module 1 includes an antenna substrate 2 and a high-frequency circuit 3. Hereinafter, an example of the module 1 being used for a radar apparatus will be described.

The antenna substrate 2 includes a plurality of transmitting antenna elements 4 (transmitting antenna elements 4a to 4d) and a plurality of receiving antenna elements 5 (receiving antenna elements 5a to 5d) in a conductive layer 2b on a dielectric substrate.

The transmitting antenna elements 4 are formed by using a conductor pattern in the conductive layer 2b on the dielectric substrate. The transmitting antenna elements 4 are elongated in the electric field direction of an electromagnetic wave to be radiated by the transmitting antenna elements 4. For example, the transmitting antenna elements 4 are dipole antennas, which are electric coupling antennas. The intervals between the transmitting antenna elements 4 are designed to be predetermined intervals, for example.

The receiving antenna elements 5 are formed by using a conductor pattern in the conductive layer 2b on the dielectric substrate. The receiving antenna elements 5 are elongated in the magnetic field direction of an electromagnetic wave to be radiated by the receiving antenna elements 5. For example, the receiving antenna elements 5 are slot antennas, which are magnetic coupling antennas. The intervals between the receiving antenna elements 5 are designed to be predetermined intervals, for example.

The receiving antenna elements 5 are of a type and a shape that differ from the type and the shape of the transmitting antenna elements 4. The transmitting antenna elements 4 and the receiving antenna elements 5 each have a MIMO configuration. In addition, the longitudinal direction of the transmitting antenna elements 4 and the longitudinal direction of the receiving antenna elements 5 are perpendicular to each other.

The high-frequency circuit 3 is, for example, a circuit obtained by a combination of a semiconductor chip, which is a complementary metal-oxide semiconductor (CMOS) chip or a gallium arsenide (GaAs) chip, and discrete components such as transistors. The high-frequency circuit 3 is disposed on the conductive layer 2b.

The high-frequency circuit 3 performs, for example, a transmit signal process in which a signal that is input from outside the module 1 is modulated and converted into a desired frequency band. A signal that has been subjected to the transmit signal process is then transmitted to the antenna substrate 2 via a mounted part (not shown) of the antenna substrate 2. The signal transmitted to the antenna substrate 2 is transmitted to the transmitting antenna elements 4 via feeder lines (not shown). The transmitting antenna elements 4 radiate the transmitted signal. The receiving antenna elements 5 receive a reflected wave of the signal radiated from the transmitting antenna elements 4. The received signal of the reflected wave is input to the high-frequency circuit 3 via the feeder lines and the mounted part. The high-frequency circuit 3 performs a receive signal process in which an input signal is subjected to frequency conversion and demodulation. The signal that has been subjected to the receive signal process is then output to outside the module 1.

The high-frequency circuit 3 may perform a signal process in the baseband (base frequency band).

In a typical module including an antenna substrate in which transmitting antenna elements and receiving antenna elements are disposed, the size of the antenna substrate increases as the intervals between the antenna elements increase.

On the other hand, if a plurality of antenna elements are disposed in a substrate of limited size, intervals between the antenna elements are reduced, and isolation characteristics are degraded as a result. For example, in an antenna substrate in which transmitting antenna elements and receiving antenna elements are disposed, intervals between the transmitting antenna elements and the receiving antenna elements are reduced, and isolation characteristics between the transmitting antenna elements and the receiving antenna elements (isolation characteristics between the transmit/receiving antennas) are degraded as a result.

In the module 1 according to the first embodiment, the transmitting antenna elements 4 are different from the receiving antenna elements 5. Specifically, the transmitting antenna elements 4 are dipole antennas, which are electric coupling antennas, and the receiving antenna elements 5 are slot antennas, which are magnetic coupling antennas. Since the longitudinal direction of the transmitting antenna elements 4 is different from the longitudinal direction of the receiving antenna elements 5, the module 1 according to the first embodiment is able to suppress the degradation of the isolation characteristics between the transmit/receiving antennas. This enables downsizing of the substrate in which the plurality of antenna elements are disposed. Hereinafter, this feature will be described.

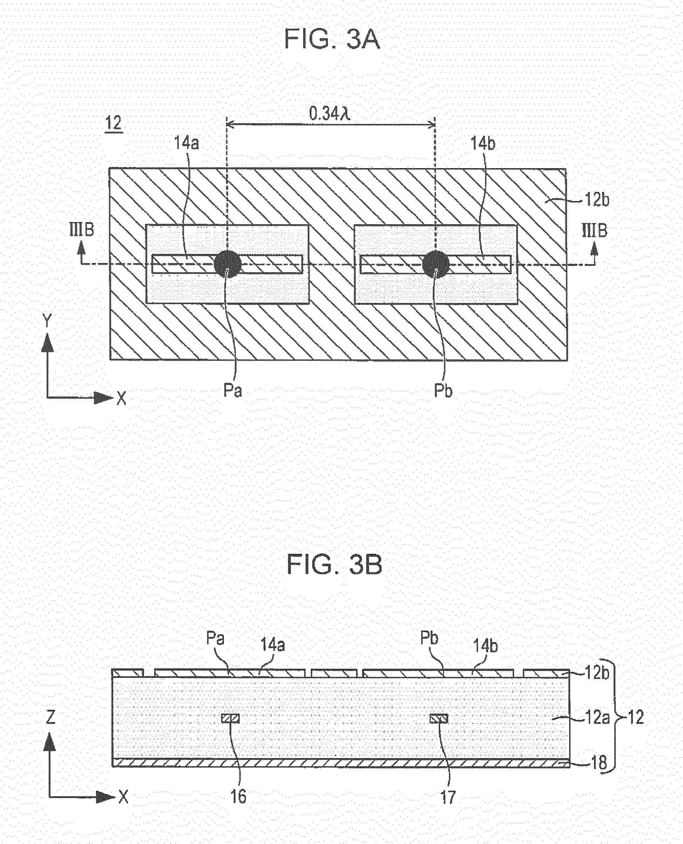

Fig. 3A is a top view of an example of an antenna substrate 12 in which antenna elements of the same shape are disposed. Fig. 3B is a cross sectional view taken along line IIIB-IIIB of Fig. 3A.

The antenna substrate 12 depicted in Figs. 3A and 3B includes an antenna element 14a and an antenna element 14b disposed in a conductive layer 12b on a dielectric substrate 12a. The antenna element 14b has the same shape as the antenna element 14a. In Fig. 3A, the antenna element 14a and the antenna element 14b are dipole antennas, which are electric coupling antennas, and are disposed such that the polarization planes are aligned, that is, the longitudinal directions of both elements are arranged in a line.

In this case, the interval between a feeding point Pa of the antenna element 14a and a feeding point Pb of the antenna element 14b is set to 0.34λ, where λ represents the free-space wavelength of an electromagnetic wave that the antenna elements 14a and 14b transmit or receive. Each of the antenna element 14a and the antenna element 14b has a length of approximately 0.5λ_{g,} (λ_{g} is the effective wavelength with the dielectric constant of the dielectric substrate 12a taken into account). The length of each of the antenna elements is 0.5/√Er × λ when converted into the free-space wavelength (Er is the relative dielectric constant of the dielectric substrate 12a). If Er is assumed to be approximately 3, the length of the antenna element 14a and the length of the antenna element 14b are each 0.29λ. Further, because patterning accuracy of the conductive layer 12b surrounding the antenna element 14a and the antenna element 14b is typically about 0.1 mm, the interval between the feeding points of the two antenna elements is set to 0.34λ considering the spaces and the like between the antenna elements and the conductive layer surrounding the antenna elements.

The interval between the feeding points of two antenna elements will be hereinafter referred to as an interval between the two antenna elements.

Fig. 3B depicts a first feeding line 16, a second feeding line 17, and a grounded conductor 18 that are formed by using a conductor pattern. The first feeding line 16 is disposed inside the dielectric substrate 12a and transmits a signal to the antenna element 14a. The second feeding line 17 is disposed inside the dielectric substrate 12a and transmits a signal to the antenna element 14b. The grounded conductor 18 is disposed on a face of the dielectric substrate 12a opposite to a face on which the antenna elements are disposed (a face on which the conductive layer 12b is disposed).

Both of the antenna elements 14a and 14b depicted in Figs. 3A and 3B may be transmitting antenna elements or receiving antenna elements. Alternatively, one of the antenna elements 14a and 14b may be a transmitting antenna element, and the other may be a receiving antenna element.

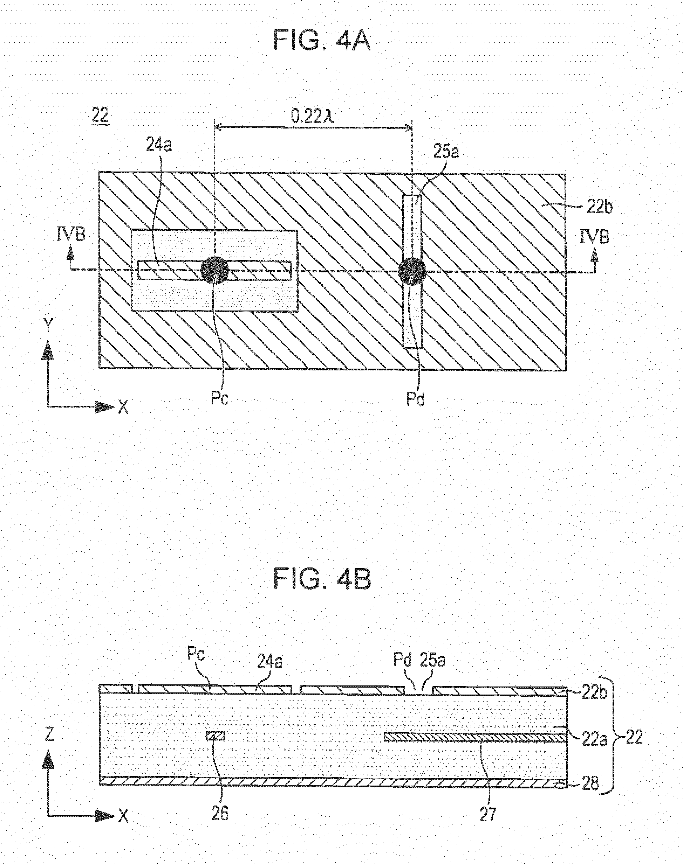

Fig. 4A is a top view of an example of an antenna substrate 22 in which antenna elements of different shapes are disposed. Fig. 4B is a cross sectional view taken along line IVB-IVB of Fig. 4A.

The antenna substrate 22 depicted in Fig. 4A includes an antenna element 24a and an antenna element 25a disposed in a conductive layer 22b on a dielectric substrate 22a. The antenna element 25a has a shape that differs from the shape of the antenna element 24a. In Fig. 4A, the antenna element 24a is a dipole antenna, which is an electric coupling antenna, and the antenna element 25a is a slot antenna, which is a magnetic coupling antenna. The polarization plane of a dipole antenna, which is an electric coupling antenna, corresponds to the longitudinal direction of the dipole antenna, and the polarization plane of a slot antenna, which is a magnetic coupling antenna, corresponds to the transverse direction of the slot. Accordingly, the antenna element 24a and the antenna element 25a are disposed such that the longitudinal directions of both antenna elements are perpendicular to each other, and thus, the polarization planes of the antenna element 24a and the antenna element 25a are aligned with each other. The interval between a feeding point Pc of the antenna element 24a and a feeding point Pd of the antenna element 25a (i.e., the interval between the antenna elements) is set to 0.22λ, where λ represents the free-space wavelength of an electromagnetic wave that the antenna elements 24a and 25a transmit or receive. Although the interval between the antenna elements is set to 0.34λ in Fig. 3A, combining an electric coupling antenna and a magnetic coupling antenna enables the interval between the antenna elements depicted in Fig. 4A to be smaller than the interval between the antenna elements depicted in Fig. 3A.

Fig. 4B depicts a first feeding line 26, a second feeding line 27, and a grounded conductor 28 that are formed by using a conductor pattern. The first feeding line 26 is disposed inside the dielectric substrate 22a and transmits a signal to the antenna element 24a. The second feeding line 27 is disposed inside the dielectric substrate 22a and transmits a signal to the antenna element 25a. The grounded conductor 28 is disposed on a face of the dielectric substrate 22a opposite to a face on which the antenna elements are disposed (a face on which the conductive layer 22b is disposed).

Both of the antenna elements 24a and 25a depicted in Figs. 4A and 4B may be transmitting antenna elements or receiving antenna elements. Alternatively, one of the antenna elements 24a and 25a may be a transmitting antenna element, and the other may be a receiving antenna element.

For example, the antenna element 24a depicted in Figs. 4A and 4B corresponds to the transmitting antenna element 4c depicted in Fig. 2, and the antenna element 25a depicted in Figs. 4A and 4B corresponds to the receiving antenna element 5d depicted in Fig. 2.

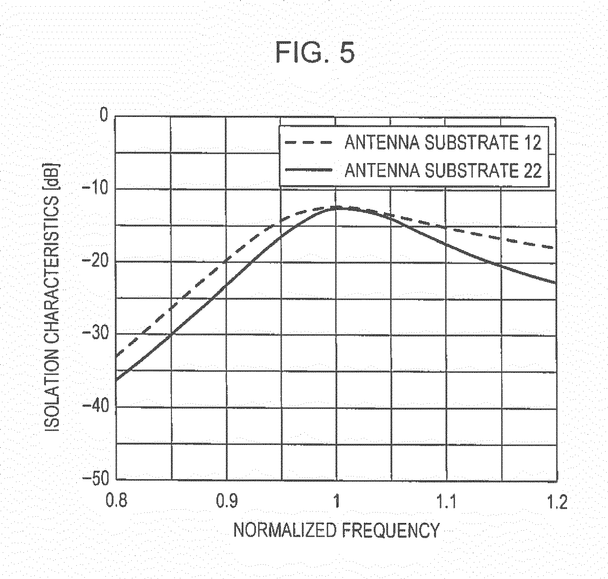

Fig. 5 illustrates isolation characteristics between antenna elements of two antenna substrates. In Fig. 5, isolation characteristics between the antenna elements of the antenna substrate 12 depicted in Figs. 3A and 3B and isolation characteristics between the antenna elements of the antenna substrate 22 depicted in Figs. 4A and 4B are illustrated. The horizontal axis in Fig. 5 represents a normalized frequency, which is a frequency normalized by the frequency of the electromagnetic wave having a wavelength λ that appears in Figs. 3A and 4A, (i.e., c/λ, where c is the speed of light). The vertical axis in Fig. 5 represents isolation characteristics expressed in decibel (dB).

As illustrated in Fig. 5, the isolation between the antenna elements of the antenna substrate 12 and the isolation between the antenna elements of the antenna substrate 22 are substantially equal at a normalized frequency of 1. The interval between the antenna elements of the antenna substrate 22 depicted in Fig. 4A is smaller than the interval between the antenna elements of the antenna substrate 12 depicted in Fig. 3A.

The above result indicates that the interval between the antenna elements can be reduced while suppressing the degradation of isolation characteristics between the antenna elements by using the antenna substrate 22 in Fig. 4A including the antenna elements 24a and 25a of different shapes, in comparison with the antenna substrate 12 in Fig. 3A including the antenna elements 14a and 14b of the same shape.

As described above, the antenna element 24a depicted in Figs. 4A and 4B corresponds to the transmitting antenna element 4c depicted in Fig. 2, and the antenna element 25a depicted in Figs. 4A and 4B corresponds to the receiving antenna element 5d depicted in Fig. 2. Thus, downsizing of the substrate in which the plurality of antenna elements are disposed is enabled for the module 1 depicted in Fig. 2 while suppressing the degradation of isolation characteristics between the transmit/receiving antennas.

Although an example of the module 1 that includes the transmitting antenna elements 4, which are electric coupling antennas, and the receiving antenna elements 5, which are magnetic coupling antennas, is described in the first embodiment described above, the present disclosure is not limited to this example. The module 1 may be a module that includes transmitting antenna elements, which are magnetic coupling antennas, and receiving antenna elements, which are electric coupling antennas. Alternatively, the module 1 may be a module that includes a plurality of transmitting antenna elements including both one or more electric coupling antennas and one or more magnetic coupling antennas, or the module 1 may be a module that includes a plurality of receiving antenna elements including both one or more electric coupling antennas and one or more magnetic coupling antennas.

Hereinafter, as a modification of the first embodiment, an example module in which a plurality of transmitting antenna elements including both one or more electric coupling antennas and one or more magnetic coupling antennas are disposed will be described.

### Modification of First Embodiment

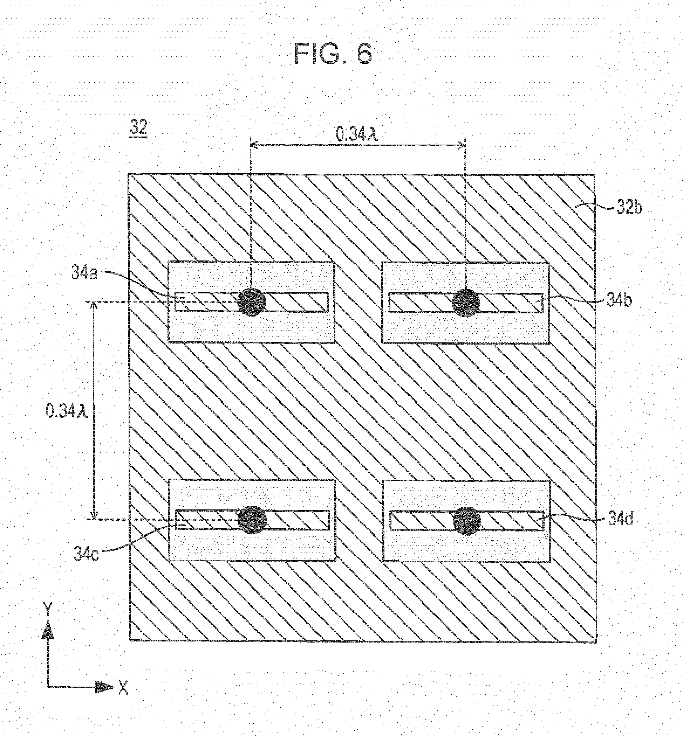

Fig. 6 is a top view of an example of an antenna substrate 32 in which antenna elements of the same shape are disposed. The antenna substrate 32 depicted in Fig. 6 includes a dielectric substrate and a plurality of transmitting antenna elements 34 (transmitting antenna elements 34a to 34d). A module is constituted as the integration of the antenna substrate 32 and a high-frequency circuit (not shown).

The transmitting antenna elements 34 are formed by using a conductor pattern in a conductive layer 32b on the dielectric substrate. The transmitting antenna elements 34 are all dipole antennas, which are electric coupling antennas.

For example, in a configuration for obtaining isolation characteristics similar to the isolation characteristics illustrated in Fig. 5, the interval between the transmitting antenna elements 34a and 34b and the interval between the transmitting antenna elements 34c and 34d are each 0.34λ, as depicted in Fig. 6. The interval between the transmitting antenna elements 34a and 34c and the interval between the transmitting antenna elements 34b and 34d are each 0.34λ. The reason why the interval between the transmitting antenna elements 34a and 34c and the interval between the transmitting antenna elements 34b and 34d are each 0.34λ is the same as the reason why the interval between the feeding point Pa of the antenna element 14a and the feeding point Pb of the antenna element 14b is 0.34λ, which has been described with reference to Fig. 3A. Therefore, description thereof will not be repeated.

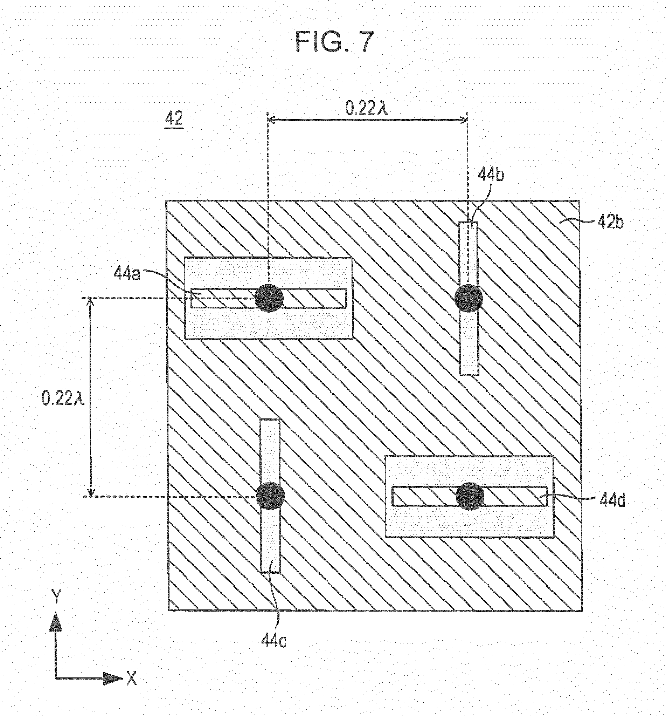

Fig. 7 is a top view of an example of an antenna substrate 42 according to a modification of the first embodiment. The antenna substrate 42 depicted in Fig. 7 is an antenna substrate in which a plurality of transmitting antenna elements including both electric coupling antennas and magnetic coupling antennas are disposed. The antenna substrate 42 depicted in Fig. 7 includes a plurality of transmitting antenna elements 44 (transmitting antenna elements 44a to 44d) formed by using a conductive layer 42b disposed on a dielectric substrate. A module is constituted as the integration of the antenna substrate 42 and a high-frequency circuit (not shown).

The transmitting antenna elements 44 are a conductor pattern formed in the conductive layer 42b on the dielectric substrate. The transmitting antenna elements 44a and 44d are dipole antennas, which are electric coupling antennas. The transmitting antenna elements 44b and 44c are slot antennas, which are magnetic coupling antennas.

For example, as depicted in Fig. 7, the interval between the transmitting antenna elements 44a and 44b and the interval between the transmitting antenna elements 44c and 44d in the X-axis direction are each set to 0.22λ. Similarly, in the Y-axis direction, the interval between the transmitting antenna elements 44a and 44c and the interval between the transmitting antenna elements 44b and 44d are each set to 0.22λ. The intervals between the transmitting antenna elements 44 are set to 0.22λ, and thereby, isolation characteristics similar to the isolation characteristics of the antenna substrate 22 depicted in Fig. 5 can be obtained.

The plurality of transmitting antenna elements 44 in Fig. 7, which include electric coupling antennas and magnetic coupling antennas, are arranged such that the longitudinal direction of the electric coupling antennas and the longitudinal direction of the magnetic coupling antennas 44 are perpendicular to each other. Accordingly, compared with the interval between the antenna elements of the antenna substrate 32 in Fig. 6, the interval between the antenna elements of the antenna substrate 42 in Fig. 7 can be reduced. Thus, the degradation of the isolation characteristics between the antenna elements is suppressed, and thereby, downsizing of the substrate in which a plurality of antenna elements are disposed can be achieved.

Although an example in which the four antenna elements are transmitting antenna elements is illustrated in Fig. 7, the four antenna elements may be receiving antenna elements. Further, although the antenna elements arranged in a two-by-two array are described as the example in Fig. 7, the present disclosure is not limited to this example and may be applied to antenna elements arranged in an m-by-n array, where m and n are each an integer larger than or equal to 2.

As described above, the module according to the first embodiment includes in the conductive layer on the dielectric substrate, the one or more electric coupling antenna elements that have a shape elongated in the electric field direction of the electromagnetic wave to be radiated by the one or more electric coupling antenna elements, and the one or more magnetic coupling antenna elements that have a shape elongated in the magnetic field direction of the electromagnetic wave to be radiated by the one or more magnetic coupling antenna elements. In this configuration, since the electric field direction and the magnetic field direction are perpendicular to each other, the antenna elements can be arranged such that the longitudinal directions of the electric coupling antenna elements are perpendicular to the longitudinal directions of the magnetic coupling antenna elements. Thus, the intervals between the plurality of antenna elements can be set to a smaller value than the intervals between the antenna elements of the antenna substrates including either electric coupling antenna elements or magnetic coupling antenna elements, and thereby, downsizing of the antenna substrates can be achieved.

In the first embodiment described above, although the example of the plurality of antenna elements formed by using the conductor pattern in the conductive layer on the dielectric substrate is described, the present disclosure is not limited to this example. For example, if the dielectric substrate is a multilayer substrate including a plurality of layers, a layer in which some of the plurality of antenna elements are formed may be different from a layer in which the remaining antenna elements are formed. Alternatively, the plurality of antenna elements may be formed in the same layer inside the multilayer substrate.

For example, in the module 1 depicted in Fig. 2, either of the transmitting antenna elements 4 or the receiving antenna elements 5 may be formed in a layer inside the dielectric substrate, and the other may be formed in the surface layer of the dielectric substrate. Alternatively, the transmitting antenna elements 4 and the receiving antenna elements 5 may be formed in different layers inside the dielectric substrate. This configuration reduces or prevents the coupling of the surface wave radiated from the transmitting antenna elements 4 with the receiving antenna elements 5, and thereby the isolation characteristics between the transmit/receiving antennas can be improved.

### Second Embodiment

In the first embodiment, an example of downsizing the substrate in which the plurality of antenna elements are disposed while suppressing the degradation of the isolation characteristics between the antenna elements has been described. In a second embodiment, an example of disposing, for example, an electromagnetic band gap (EBG) structure in an antenna substrate as a configuration to improve isolation characteristics will be described. The EBG structure has been disclosed, for example, in Patent Literature 2 and Non Patent Literature 1.

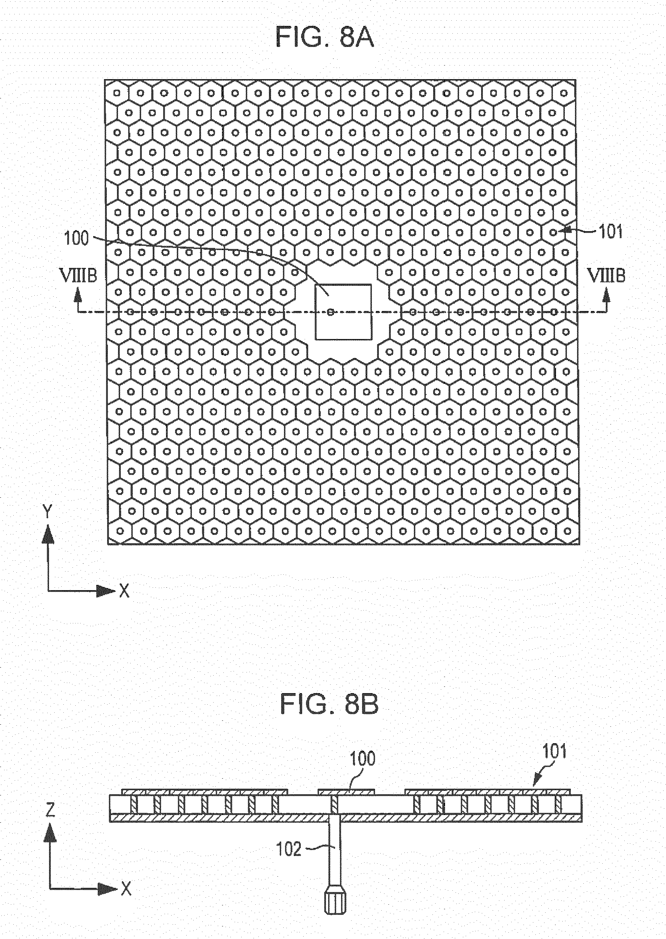

Fig. 8A depicts a planar antenna disclosed in Patent Literature 2. Fig. 8B is a cross sectional view taken along line VIIIB-VIIIB of Fig. 8A. The planar antenna depicted in Figs. 8A and 8B includes a patch antenna 100, EBG structures 101 disposed so as to surround the patch antenna 100, and a coaxial cable 102 connected to the patch antenna 100.

The patch antenna 100 is formed on a surface of a dielectric substrate by using a conductor pattern and fed through the coaxial cable 102 from the back of the dielectric substrate. Metal electrodes of a polygonal shape (a hexagon in Fig. 8A) are periodically arranged around the patch antenna 100 on the surface of the dielectric substrate. The EBG structures 101 are constructed by electrically connecting each metal electrode to a grounded conductor, which is a metal film formed on the back of the dielectric substrate, by using, for example, through holes that extend through the dielectric substrate. This structure provides circuit characteristics obtained by inductors (L) and capacitors (C) connected to each other in a continuous manner, and a resulting LC resonance can increase the surface impedance of the dielectric substrate at a particular frequency. Thus, among the electromagnetic waves radiated from the patch antenna 100, surface waves that propagate on the surface of the dielectric substrate can be attenuated. Consequently, electromagnetic wave propagation to the sides and the back of the patch antenna 100 is suppressed, and unnecessary radiation can be suppressed.

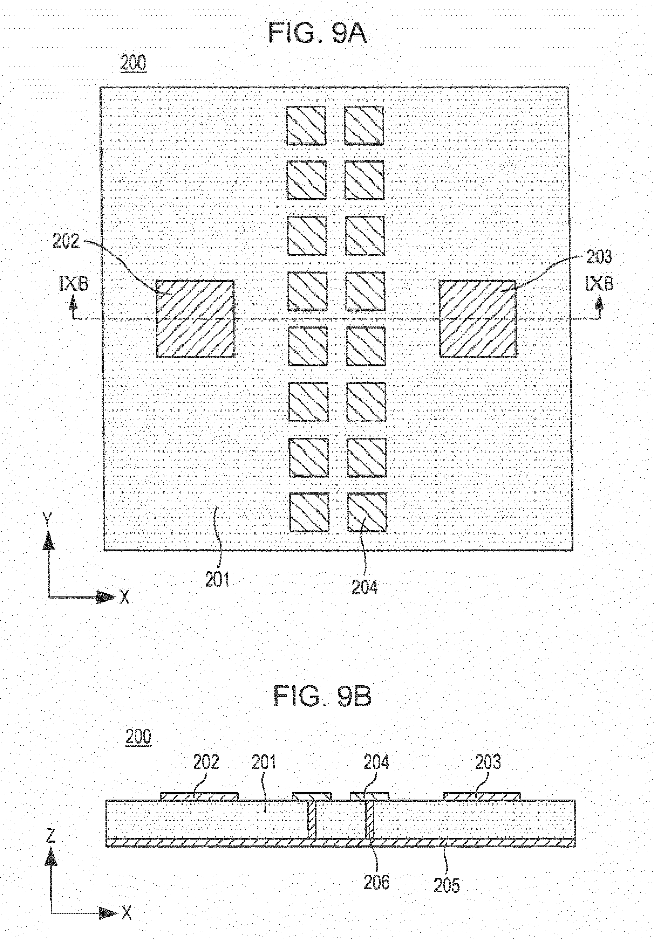

Fig. 9A is a top view of a structure of planar antennas 200 disclosed in Non Patent Literature 1. Fig. 9B is a cross sectional view taken along line IXB-IXB of Fig. 9A.

The planar antenna 200 depicted in Figs. 9A and 9B includes a dielectric substrate 201, a first antenna element 202, a second antenna element 203, EBG structures 204, a grounded conductor 205, and through holes 206.

The first antenna element 202 and the second antenna element 203 are formed on the dielectric substrate 201 by using a conductor pattern. The grounded conductor 205 is formed on the back of the dielectric substrate 201 by using a conductor pattern. The EBG structures 204 are arranged periodically between the first antenna element 202 and the second antenna element 203 and include periodical conductor patterns formed on a surface of the dielectric substrate 201 and through holes 206 to connect each of the periodical conductor patterns to the grounded conductor 205. The first antenna element 202 and the second antenna element 203 have the same shape and are arranged so as to have the same polarization plane.

Similarly to the example depicted in Figs. 8A and 8B, the EBG structures 204 have an effect of suppressing the surface waves propagating on the dielectric substrate 201, and consequently, the isolation characteristics between the first antenna element 202 and the second antenna element 203 that constitute the planar antenna 200 can be improved.

However, it is desirable to have a certain interval between the antenna elements to dispose EBG structures between the antenna elements.

For example, Non Patent Literature 1 discloses an example in which the size of the first antenna element 202 and the size of the second antenna element 203 are both 6.8 mm × 5 mm, and the interval between the antenna elements is 38.8 mm in the 5.8 GHz band. Non Patent Literature 1 also discloses that the sides of an EBG structure 204 are 3 mm in length and the intervals between EBG structures are 0.5 mm. When converted into the wavelength in the 5.8 GHz band, an interval between the antenna elements of 38.8 mm is approximately 0.75λ. If the interval between the antenna elements disclosed in Non Patent Literature 1 is reduced to less than or equal to 0.75λ, the antenna performance (for example, the isolation characteristics) may be degraded.

Thus, in the second embodiment, a module that can suppress the increase in the interval between the antenna elements even in a configuration that improves isolation characteristics by using EBG structures will be described.

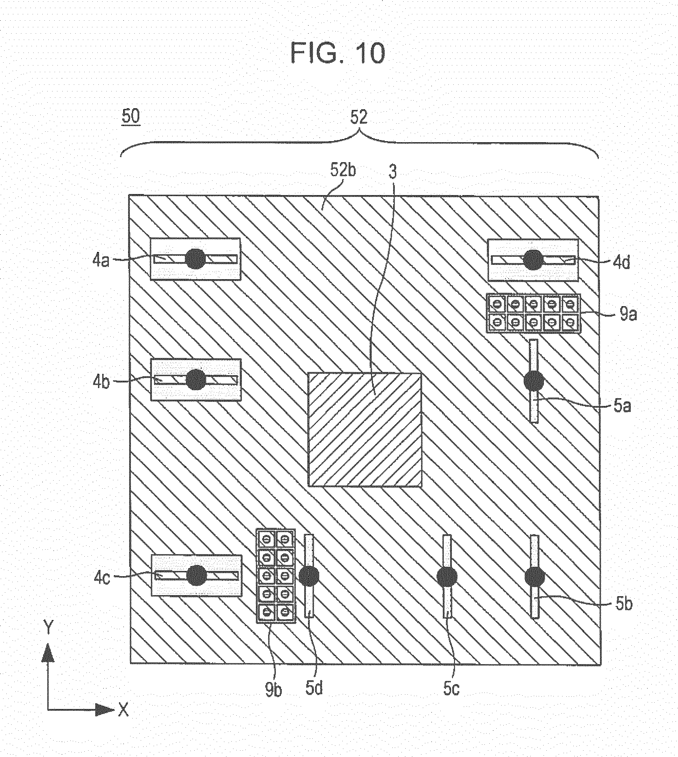

Fig. 10 depicts a structure of a module 50 according to the second embodiment. In Fig. 10, structures that are the same as or similar to those of the module 1 depicted in Fig. 2 are denoted by the same numerals or symbols and will not be described hereinafter.

The module 50 depicted in Fig. 10 includes an antenna substrate 52 and the high-frequency circuit 3. The antenna substrate 52 is configured such that EBG structures 9a and 9b are added to the antenna substrate 2 depicted in Fig. 2.

The EBG structure 9a is formed between the transmitting antenna element 4d and the receiving antenna element 5a. The EBG structure 9b is formed between the transmitting antenna element 4c and the receiving antenna element 5d.

A specific configuration of the EBG structures will be described for the EBG structure 9b as an example.

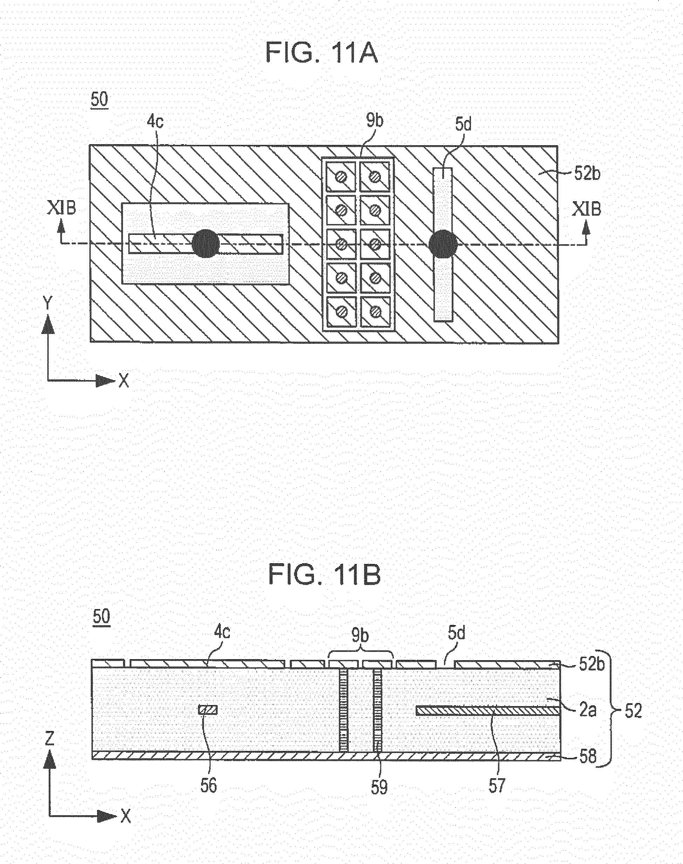

Fig. 11A is an enlarged view of the EBG structure 9b and a peripheral area of the EBG structure 9b of the module 50 according to the second embodiment. Fig. 11B is a cross sectional view taken along line XIB-XIB of Fig. 11A.

Fig. 11B depicts a first feeding line 56, a second feeding line 57, a grounded conductor 58, and through holes 59. The first feeding line 56 is disposed inside the dielectric substrate 2a and transmits a signal to the antenna element 4c. The second feeding line 57 is disposed inside the dielectric substrate 2a and transmits a signal to the antenna element 5d. The grounded conductor 58 is disposed on a face of the dielectric substrate 2a opposite to a face on which the antenna elements are disposed (the face on which the conductive layer 52b is disposed).

The EBG structure 9b includes a conductor pattern (see Fig. 11A) periodically arranged on the face of the dielectric substrate 2a on which the antenna elements 4 and 5 are disposed and through holes 59 connecting the conductor pattern to the grounded conductor 58 (see Fig. 11 B).

In the module 50 according to the second embodiment, since the antenna elements having different longitudinal directions for the transmitting antenna elements 4 and the receiving antenna elements 5 are used, the intervals between the antenna elements can be reduced even in the configuration having the EBG structures for improving isolation characteristics. Hereinafter, this feature will be described.

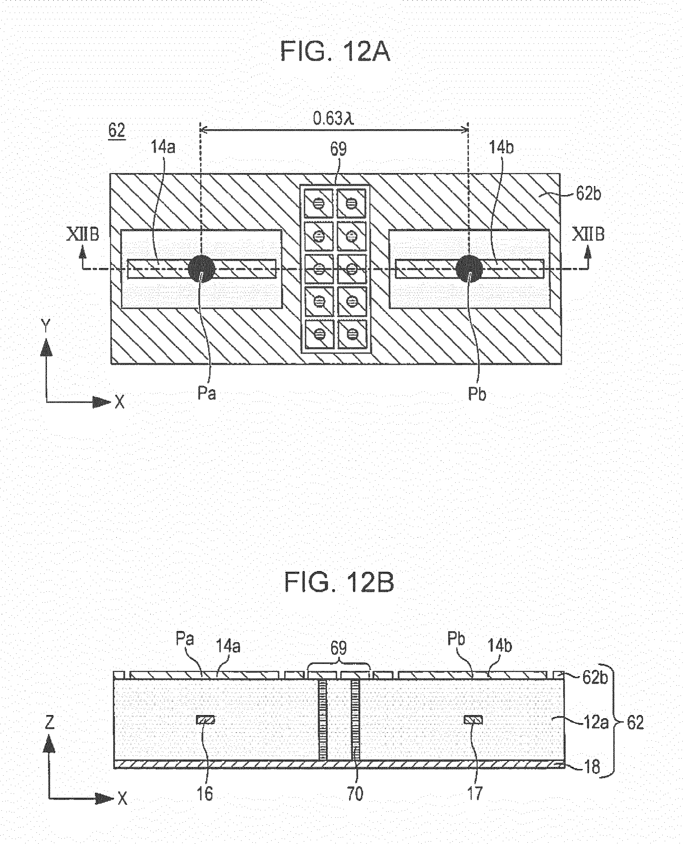

Fig. 12A is a top view of an example of an antenna substrate 62 in which antenna elements of the same shape are disposed. Fig. 12B is a cross sectional view taken along line XIIB-XIIB of Fig. 12A. In Figs. 12A and 12B, structures that are the same as or similar to those of the antenna substrate 12 depicted in Figs. 3A and 3B are denoted by the same numerals or symbols and will not be described hereinafter.

In the antenna substrate 62 depicted in Figs. 12A and 12B, the interval between the antenna elements is widened compared with the interval between the antenna elements of the antenna substrate 12 depicted in Figs. 3A and 3B, and additionally an EBG structure 69 is disposed between the antenna elements. With the EBG structure 69 disposed between the antenna elements, the interval between the antenna elements 14a and 14b is set to 0.63λ, considering the patterning accuracy of a conductive layer 62b surrounding the antenna elements.

Similarly to Figs. 11A and 11B, the EBG structure 69 includes a conductor pattern periodically arranged on the face of the dielectric substrate 12a on which the antenna elements are disposed and through holes 70 connecting the conductor pattern to the grounded conductor 18.

The antenna elements 14a and 14b depicted in Figs. 12A and 12B may both be transmitting antenna elements or receiving antenna elements. Alternatively, one of the antenna elements 14a and 14b may be a transmitting antenna element, and the other may be a receiving antenna element.

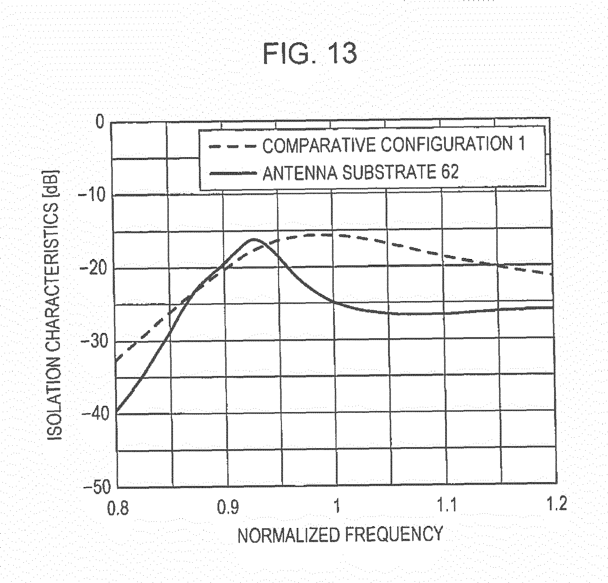

Fig. 13 illustrates isolation characteristics between the antenna elements of the antenna substrate 62 depicted in Figs. 12A and 12B and isolation characteristics between antenna elements in a configuration (hereinafter referred to as comparative configuration 1) in which the EBG structure 69 is not present, and the conductive layer 62b is present between the antenna elements in the configuration depicted in Figs. 12A and 12B. Comparative configuration 1 is equivalent to, for example, a configuration of the antenna substrate 12 depicted in Figs. 3A and 3B in which the interval between the antenna elements is changed to 0.63λ, as in the antenna substrate 62. The horizontal axis in Fig. 13 represents a normalized frequency, which is a frequency normalized by the frequency of the electromagnetic wave having a wavelength of λ that appears in Fig. 12A, (i.e., c/λ, where c is the speed of light). The vertical axis in Fig. 13 represents isolation characteristics expressed in decibel (dB).

As illustrated in Fig. 13, the isolation characteristics between the antenna elements of the antenna substrate 62 are improved compared with the isolation characteristics between the antenna elements of the antenna substrate 12 because of the EBG structure 69 disposed in the antenna substrate 62.

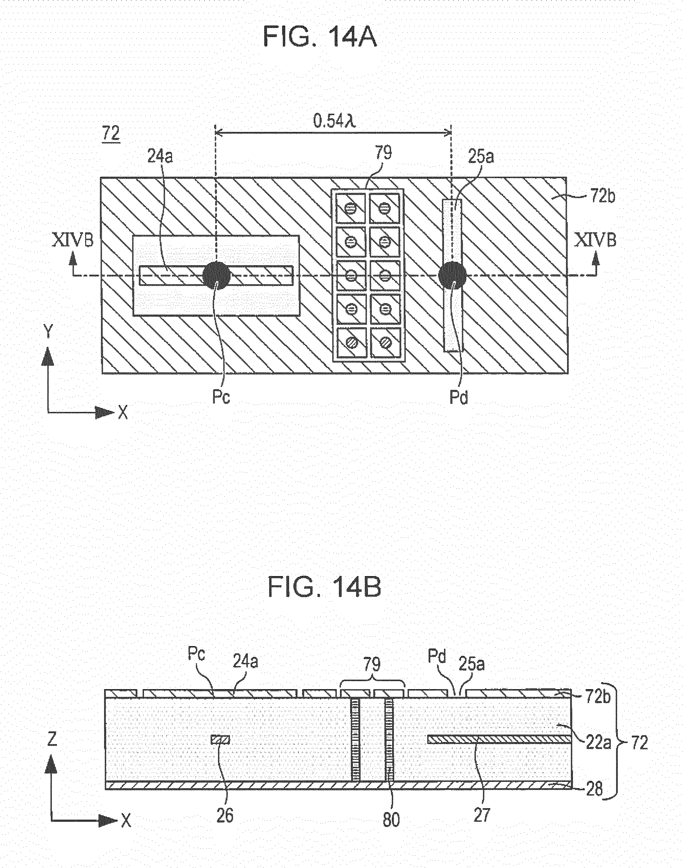

Fig. 14A is a top view of an example of an antenna substrate 72 in which antenna elements of different shapes are disposed. Fig. 14B is a cross sectional view taken along line XIVB-XIVB of Fig. 14A. In Figs. 14A and 14B, structures that are the same as or similar to those of the antenna substrate 22 depicted in Figs. 4A and 4B are denoted by the same numerals or symbols and will not be described hereinafter.

In the antenna substrate 72 depicted in Figs. 14A and 14B, the interval between the antenna elements is widened compared with the interval between the antenna elements of the antenna substrate 22 depicted in Figs. 4A and 4B, and additionally an EBG structure 79 is disposed between the antenna elements. With the EBG structure 79 disposed between the antenna elements, the interval between the antenna elements 24a and 25a is set to 0.54λ, considering the patterning accuracy of the conductive layer 72b surrounding the antenna elements.

The EBG structure 79 includes a conductor pattern (see Fig. 14A) periodically arranged on the face of the dielectric substrate 22a on which the antenna elements are disposed and through holes 80 connecting the conductor pattern to the grounded conductor 28 (see Fig. 14B).

Both of the antenna elements 24a and 25a depicted in Figs. 14A and 14B may be transmitting antenna elements or receiving antenna elements. Alternatively, one of the antenna elements 24a and 25a may be a transmitting antenna element, and the other may be a receiving antenna element.

For example, the antenna element 24a, the antenna element 25a, and the EBG structure 79 depicted in Figs. 14A and 14B correspond to the transmitting antenna element 4c, the receiving antenna element 5d, and the EBG structure 9b depicted in Fig. 10, respectively.

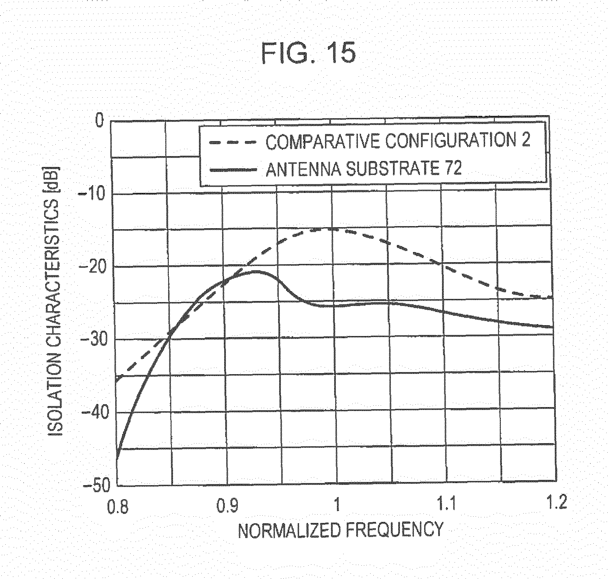

Fig. 15 illustrates isolation characteristics between the antenna elements of the antenna substrate 72 depicted in Figs. 14A and 14B and isolation characteristics between antenna elements in a configuration (hereinafter referred to as comparative configuration 2) in which the EBG structure 79 is not present, and the conductive layer 72b is present between the antenna elements in the configuration depicted in Figs. 14A and 14B. Comparative configuration 2 is equivalent to, for example, a configuration of the antenna substrate 22 depicted in Figs. 4A and 4B in which the interval between the antenna elements is changed to 0.54λ, as in the antenna substrate 72. The horizontal axis in Fig. 15 represents a normalized frequency, which is a frequency normalized by the frequency of the electromagnetic wave having a wavelength of λ that appears in Figs. 4A and 14A, (i.e., c/λ, where c is the speed of light). The vertical axis in Fig. 15 represents isolation characteristics expressed in decibel (dB).

As illustrated in Fig. 15, the isolation characteristics between the antenna elements of the antenna substrate 72 are improved compared with the isolation characteristics between the antenna elements of the antenna substrate 22 because of the EBG structure 79 disposed in the antenna substrate 72.

The interval between the antenna elements of the antenna substrate 72 depicted in Fig. 14A can be reduced compared with the interval between the antenna elements of the antenna substrate 62 depicted in Fig. 12A.

In other words, in the case where the EBG structure 79 is disposed in the antenna substrate 72 to improve the isolation characteristics, the interval between the antenna elements can be reduced for the antenna substrate 72 including the antenna elements 24a and 25a, which have different configurations from each other, compared with the antenna substrate 62 including the antenna elements 14a and 14b, which have the same configuration.

As described above, the antenna element 24a, the antenna element 25a, and the EBG structure 79 depicted in Figs. 14A and 14B correspond to the transmitting antenna element 4c, the receiving antenna element 5d, and the EBG structure 9b depicted in Fig. 10, respectively. Thus, in the module 50 depicted in Fig. 10, by disposing the EBG structure, the isolation characteristics between the transmitting antenna elements 4 and the receiving antenna elements 5 (isolation characteristics between transmit/receiving antennas) can be improved, and, further, the substrate can be downsized.

Although an example of the module 50 that includes the transmitting antenna elements 4, which are electric coupling antennas, the receiving antenna elements 5, which are magnetic coupling antennas, and the EBG structures 9, each of which is disposed between a corresponding one of the transmitting antenna elements 4 and a corresponding adjacent one of the receiving antenna elements 5, is described in the second embodiment, the present disclosure is not limited to this example. The module 50 may be a module that includes transmitting antenna elements, which are magnetic coupling antennas, and receiving antenna elements, which are electric coupling antennas. Alternatively, the module 50 may be a module that includes a plurality of transmitting antenna elements including both one or more electric coupling antennas and one or more magnetic coupling antennas, or the module 50 may be a module that includes a plurality of receiving antenna elements including both one or more electric coupling antennas and one or more magnetic coupling antennas. In addition, the position where each EBG structure is disposed is not limited to the position between one of the transmitting antenna elements 4 and an adjacent one of the receiving antenna elements 5.

Hereinafter, as a modification of the second embodiment, an example module that includes a plurality of transmitting antenna elements including both one or more electric coupling antennas and one or more magnetic coupling antennas, and EBG structures disposed between the transmitting antenna elements will be described.

### Modification of Second Embodiment

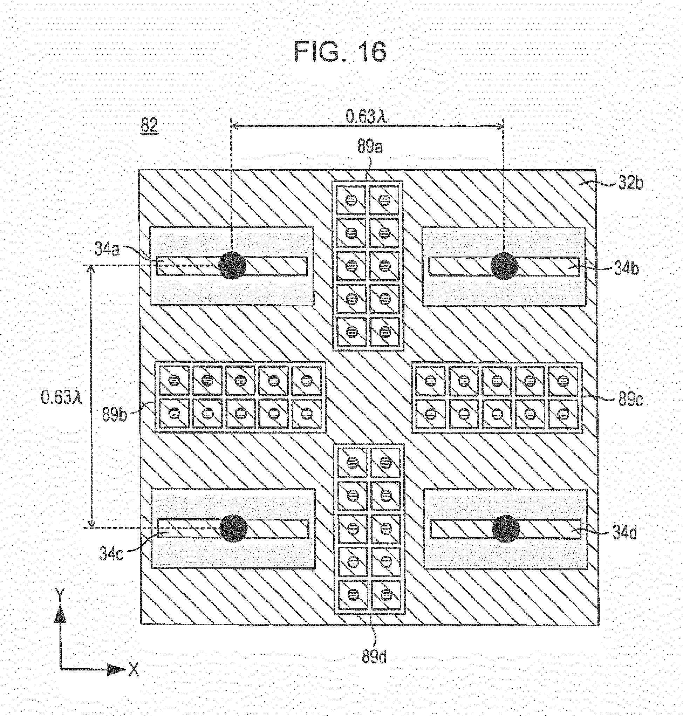

Fig. 16 is a top view of an example of an antenna substrate 82 in which antenna elements of the same shape are disposed. In Fig. 16, structures that are the same as or similar to those of the antenna substrate 32 depicted in Fig. 6 are denoted by the same numerals or symbols and will not be described hereinafter.

In the antenna substrate 82 depicted in Fig. 16, the intervals between the antenna elements are widened compared with the intervals between the antenna elements of the antenna substrate 32 depicted in Fig. 6, and additionally EBG structures 89a to 89d are disposed between the antenna elements.

The EBG structure 89a is formed between the transmitting antenna element 34a and the transmitting antenna element 34b. The EBG structure 89b is formed between the transmitting antenna element 34a and the transmitting antenna element 34c. The EBG structure 89c is formed between the transmitting antenna element 34b and the transmitting antenna element 34d. The EBG structure 89d is formed between the transmitting antenna element 34c and the transmitting antenna element 34d.

A specific configuration of the EBG structures is the same as or similar to the configuration of the EBG structure 9b described with reference to Figs. 11A and 11B.

For example, in the configuration to obtain isolation characteristics similar to the isolation characteristics illustrated in Fig. 13, the intervals between adjacent antenna elements are set to 0.63λ as depicted in Fig. 16, and the EBG structures 89 (EBG structures 89a to 89d) are formed between an antenna element and one of the adjacent antenna elements.

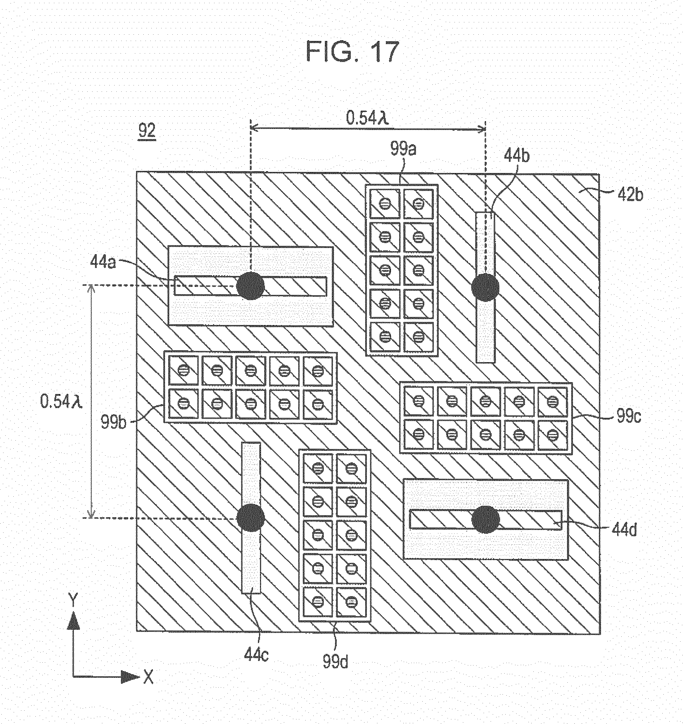

Fig. 17 is a top view of an example of an antenna substrate 92 according to a modification of the second embodiment. In Fig. 17, structures that are the same as or similar to those of the antenna substrate 42 depicted in Fig. 7 are denoted by the same numerals or symbols and will not be described hereinafter.

In the antenna substrate 92 depicted in Fig. 17, the intervals between the antenna elements are widened compared with the intervals between the antenna elements of the antenna substrate 42 depicted in Fig. 7, and additionally EBG structures 99a to 99d are disposed between the antenna elements.

The EBG structure 99a is formed between the transmitting antenna element 44a and the transmitting antenna element 44b. The EBG structure 99b is formed between the transmitting antenna element 44a and the transmitting antenna element 44c. The EBG structure 99c is formed between the transmitting antenna element 44b and the transmitting antenna element 44d. The EBG structure 99d is formed between the transmitting antenna element 44c and the transmitting antenna element 44d.

A specific configuration of the EBG structures is the same as or similar to the configuration of the EBG structure 9b described with reference to Figs. 11A and 11B.

For example, in the configuration to obtain isolation characteristics similar to the isolation characteristics illustrated in Fig. 15, the intervals between adjacent antenna elements are set to 0.54λ as depicted in Fig. 17, and the EBG structures 99 (EBG structures 99a to 99d) are formed between an antenna element and one of the adjacent antenna elements.

In the antenna substrate 92 depicted in Fig. 17, the intervals between the antenna elements can be reduced, even in a configuration having EBG structures, compared with the intervals between the antenna elements of the antenna substrate 82 depicted in Fig. 16 because the antenna substrate 92 includes the plurality of transmitting antenna elements 44 including both one or more electric coupling antennas and one or more magnetic coupling antennas. Thus, by disposing the EBG structures, the isolation characteristics between the antenna elements can be improved and, further, the substrate in which the plurality of antenna elements are disposed can be downsized.

Although an example in which the four antenna elements are transmitting antenna elements is illustrated in Fig. 17, the four antenna elements may be receiving antenna elements. Further, although the antenna elements arranged in a two-by-two array are described as the example in Fig. 17, the present disclosure is not limited to this example and may be applied to antenna elements arranged in an m-by-n array, where m and n are integers larger than or equal to 2.

As described above, the module according to the second embodiment includes the one or more electric coupling antenna elements formed by using the conductor pattern in the conductive layer on the dielectric substrate, the one or more magnetic coupling antenna elements formed by using the conductor pattern in the conductive layer on the dielectric substrate, and the one or more EBG structures, each of which is formed between one of the electric coupling antenna elements and one of the magnetic coupling antenna elements. Using this configuration, the isolation characteristics can be improved, and the substrate in which the plurality of antenna elements are disposed can be downsized.

In the second embodiment described above, although the example of the plurality of antenna elements formed by using the conductor pattern in the conductive layer, which is a surface layer of the dielectric substrate, is described, the present disclosure is not limited to this example. For example, if the dielectric substrate is a multilayer substrate including a plurality of layers, a layer in which some of the plurality of antenna elements are formed may be different from a layer in which the remaining antenna elements are formed. Alternatively, the plurality of antenna elements may be formed in the same layer inside the multilayer substrate.

For example, in the module 50 depicted in Fig. 10, either of the transmitting antenna elements 4 or the receiving antenna elements 5 may be formed in a layer inside the dielectric substrate 2a, and the other may be formed in the surface layer of the dielectric substrate 2a. Alternatively, the transmitting antenna elements 4 and the receiving antenna elements 5 may be formed in different layers inside the dielectric substrate 2a. This configuration reduces or prevents the coupling of the surface wave radiated from the transmitting antenna elements 4 with the receiving antenna elements 5, and thereby the isolation characteristics between the transmit/receiving antennas can be improved.

If some of the plurality of antenna elements are formed in a layer that is different from a layer in which the remaining antenna elements are formed, the EBG structures may be formed in any of the layers. For example, if a set of antenna elements among the plurality of antenna elements are formed in the surface layer, the EBG structures are formed in the surface layer between the two antenna elements to be isolated from each other as viewed from the top.

In each of the aforementioned embodiments, although a dipole antenna represents an electric coupling antenna as an example, and a slot antenna represents a magnetic coupling antenna as an example, the present disclosure is not limited to these embodiments. For example, a microstrip antenna may be used for an electric coupling antenna, and a loop antenna may be used for a magnetic coupling antenna.

In each of the aforementioned embodiments, although the example modules including four transmitting antenna elements and four receiving antenna elements are described, the number of transmitting antenna elements and the number of receiving antenna elements are not limited to these examples.

The sizes of the antenna elements, the intervals between the antenna elements, and other parameters illustrated in each of the aforementioned embodiments are described by way of example only, and the present disclosure is not limited to these examples.

In each of the aforementioned embodiments, although the modules used for a radar apparatus are described by way of example, and the uses of the modules of the present disclosure are not limited to a radar apparatus. For example, a module according to the present disclosure may be used for a wireless communication apparatus.

Although the various embodiments have been described with reference to the drawings, it should be understood that the present disclosure is not limited to these embodiments. Obviously, those skilled in the art can envisage various modifications and alterations within the scope defined by the claims, and it should be understood that such modifications and alterations also fall within the scope of the present disclosure. Any combinations of the various elements in the aforementioned embodiments are possible within the spirit of the present disclosure.

### Conclusion of Present Disclosure

A module according to an embodiment of the present disclosure includes a dielectric substrate, one or more electric coupling antenna elements that are formed in one or more conductive layers included in the dielectric substrate and that have a shape elongated in an electric field direction of an electromagnetic wave to be radiated by the one or more electric coupling antenna elements, and one or more magnetic coupling antenna elements that are formed in the one or more conductive layers and that have a shape elongated in a magnetic field direction of the electromagnetic wave to be radiated by the one or more electric coupling antenna elements.

In the module according to an embodiment of the present disclosure, the one or more electric coupling antenna elements are transmitting antennatransmitting antennas, and the one or more magnetic coupling antenna elements are receiving antennas.

In the module according to an embodiment of the present disclosure, a longitudinal direction of the one or more electric coupling antenna elements and a longitudinal direction of the one or more magnetic coupling antenna elements are perpendicular to each other.

In the module according to an embodiment of the present disclosure, the one or more electric coupling antenna elements are dipole antennas, and the one or more magnetic coupling antenna elements are slot antennas.

The module according to an embodiment of the present disclosure further includes an electromagnetic band gap structure formed at one or more intervals between the one or more electric coupling antenna elements and the one or more magnetic coupling antenna elements.

In the module according to an embodiment of the present disclosure, the dielectric substrate is a multilayer substrate including at least a first layer and a second layer, and the one or more electric coupling antenna elements are formed in a conductive layer on the first layer, and the one or more magnetic coupling antenna elements are formed in a conductive layer on the second layer.

In the module according to an embodiment of the present disclosure, one of the first layer and the second layer is a surface layer, and an electromagnetic band gap structure is formed in the conductive layer on the first layer at an interval between the one or more electric coupling antenna elements and the one or more magnetic coupling antenna elements as viewed from the top.

The module according to an embodiment of the present disclosure further includes a semiconductor chip that is connected to each of the one or more electric coupling antenna elements and each of the one or more magnetic coupling antenna elements and that processes a radio-frequency signal.

A wireless communication apparatus according to an embodiment of the present disclosure includes one or more electric coupling antenna elements that are formed in one or more conductive layers included in a dielectric substrate and that have a shape elongated in an electric field direction of an electromagnetic wave to be radiated by the one or more electric coupling antenna elements, one or more magnetic coupling antenna elements that are formed in the one or more conductive layers and that have a shape elongated in a magnetic field direction of the electromagnetic wave to be radiated by the one or more electric coupling antenna elements, and a semiconductor chip that is connected to each of the one or more electric coupling antenna elements and each of the one or more magnetic coupling antenna elements and that processes a radio-frequency signal.

A radar apparatus according to an embodiment of the present disclosure includes one or more electric coupling antenna elements that are formed in one or more conductive layers included in a dielectric substrate and that have a shape elongated in an electric field direction of an electromagnetic wave to be radiated by the one or more electric coupling antenna elements, one or more magnetic coupling antenna elements that are formed in the one or more conductive layers and that have a shape elongated in a magnetic field direction of the electromagnetic wave to be radiated by the one or more electric coupling antenna elements, and a semiconductor chip that is connected to each of the one or more electric coupling antenna elements and each of the one or more magnetic coupling antenna elements and that processes a radio-frequency signal.

The present disclosure is effective as a transmit module and a receive module in a radar apparatus or a communication apparatus using a MIMO method.

## Claims

1. A module comprising:
a dielectric substrate;
one or more electric coupling antenna elements that are formed in one or more conductive layers included in the dielectric substrate and that have a shape elongated in an electric field direction of an electromagnetic wave to be radiated by the one or more electric coupling antenna elements; and
one or more magnetic coupling antenna elements that are formed in the one or more conductive layers and that have a shape elongated in a magnetic feld direction of the electromagnetic wave to be radiated by the one or more electric coupling antenna elements.

2. The module according to Claim 1,
wherein the one or more electric coupling antenna elements are transmitting antennas, and
wherein the one or more magnetic coupling antenna elements are receiving antennas.

3. The module according to Claim 1,
wherein a longitudinal direction of the one or more electric coupling antenna elements and a longitudinal direction of the one or more magnetic coupling antenna elements are perpendicular to each other.

4. The module according to Claim 1,
wherein the one or more electric coupling antenna elements are dipole antennas, and
wherein the one or more magnetic coupling antenna elements are slot antennas.

5. The module according to Claim 1, comprising:
an electromagnetic band gap structure formed at one or more intervals between the one or more electric coupling antenna elements and the one or more magnetic coupling antenna elements.

6. The module according to Claim 1,
wherein the dielectric substrate is a multilayer substrate including at least a first layer and a second layer, and
wherein the one or more electric coupling antenna elements are formed in a conductive layer on the first layer, and the one or more magnetic coupling antenna elements are formed in a conductive layer on the second layer.

7. The module according to Claim 6,
wherein one of the first layer and the second layer is a surface layer, and
wherein an electromagnetic band gap structure is formed in the conductive layer on the first layer at an interval between the one or more electric coupling antenna elements and the one or more magnetic coupling antenna elements as viewed from the top.

8. The module according to Claim 1, comprising:
a semiconductor chip that is connected to each of the one or more electric coupling antenna elements and each of the one or more magnetic coupling antenna elements and that processes a radio-frequency signal.

9. A wireless communication apparatus comprising:
one or more electric coupling antenna elements that are formed in one or more conductive layers included in a dielectric substrate and that have a shape elongated in an electric field direction of an electromagnetic wave to be radiated by the one or more electric coupling antenna elements;
one or more magnetic coupling antenna elements that are formed in the one or more conductive layers and that have a shape elongated in a magnetic field direction of the electromagnetic wave to be radiated by the one or more electric coupling antenna elements; and
a semiconductor chip that is connected to each of the one or more electric coupling antenna elements and each of the one or more magnetic coupling antenna elements and that processes a radio-frequency signal.

10. A radar apparatus comprising:
one or more electric coupling antenna elements that are formed in one or more conductive layers included in a dielectric substrate and that have a shape elongated in an electric field direction of an electromagnetic wave to be radiated by the one or more electric coupling antenna elements;
one or more magnetic coupling antenna elements that are formed in the one or more conductive layers and that have a shape elongated in a magnetic field direction of the electromagnetic wave to be radiated by the one or more electric coupling antenna elements; and
a semiconductor chip that is connected to each of the one or more electric coupling antenna elements and each of the one or more magnetic coupling antenna elements and that processes a radio-frequency signal.
